# EUROPÄISCHE PATENTSCHRIFT

(11) **EP 3 947 049 B1**
(45) Veröffentlichungstag und Bekanntmachung des Hinweises auf die Patenterteilung: **27.04.2022**
(21) Anmeldenummer: 21704770.3
(22) Anmeldetag: 10.02.2021
(51) Int. Cl.: B60R 16/023, B60R 25/24, G01S 5/02, G01S 5/04, H04W 4/02, H04W 4/40, H04W 8/00, H04W 8/16, G08B 13/196

(54) **SCHADENDETEKTION UND VERURSACHERTRACKING**
DAMAGE DETECTION AND ORIGINATOR TRACKING
SYSTÈME DE DÉTECTION D'ENDOMMAGEMENT ET DE SUIVI DE RESPONSABLE

(30) Priorität: 09.03.2020 DE 102020106238
(43) Veröffentlichungstag der Anmeldung: 09.02.2022
(73) Patentinhaber: Audi AG, 85045 Ingolstadt (DE)
(72) Erfinder: HAGEN, Harald, 95473 Creußen (DE); WENDT, Willi, 85139 Wettstetten (DE)
(86) Internationale Anmeldenummer: PCT/EP2021/053233
(87) Internationale Veröffentlichungsnummer: WO 2021/180410

(56) Entgegenhaltungen:
- DE-A1- 10 250 952
- DE-A1-102017 219 818
- DE-A1-102018 214 654

## Beschreibung

Die vorliegende Erfindung betrifft ein Verfahren zur Detektion eines Unfallschadens bei einem geparkten Fahrzeug und zur Identifizierung des Verursachers des Schadens sowie ein entsprechendes Kraftfahrzeug.

Um ein geparktes Fahrzeug während der Abwesenheit des Fahrzeugführers auf Parkkollisionen zu überwachen und gegebenenfalls den Fahrzeughalter oder Fuhrparkmanager über Beschädigungen zu informieren, werden Systeme eingesetzt, die Parkkollisionen detektieren und den Fahrzeughalter oder Fuhrparkmanager bzw. einen autorisierten Adressaten benachrichtigen. Über einen Zentralsensor oder einzelne Sensoren, die an Fahrzeugaußenteilen befestigt sind, werden Fahrzeugerschütterungen und Körperschall-Ereignisse an Karosserieteilen detektiert. Diese Körperschallsignale werden ausgewertet und je nach Schwere als ein Schadensereignis (Kratzer/Schlag/ Delle/Stauchung) klassifiziert. und der abwesende Fahrzeugführer oder -halter wird über Telematik informiert. Zeitversetzt wird die Umfeldkamera des Fahrzeugs in Betrieb gesetzt und das Umfeld des Fahrzeugs kann von dem autorisierten Nutzer über Fernzugriff eingesehen werden und/oder es wird automatisch eine Aufnahme oder eine Videoaufzeichnung mit der Umfeldkamera oder einer Dashcam erstellt.

Die Aufnahmen der Umfeldkamera (z.B. 3D View) erfassen das gesamte Fahrzeugumfeld nur großflächig. Der Verursacher des Schadens kann nicht oder nur mit hohem Aufwand ermittelt und identifiziert werden. Durch die Zeitverzögerung zwischen dem Schadensereignis und dem Start der Kamera ist der Verursacher bei einer Unfallflucht eventuell nicht mehr auf der Aufnahme oder es wird eine unbeteiligte Person fälschlich als Verursacher eingestuft. Dies gilt insbesondere bei schnellen Bagatellschäden und Kratzern (z.B. durch Einkaufswagen etc.). Die großflächigen Dashcam Aufnahmen sind damit häufig nur von geringem Nutzen. Eine dauernde großflächige Beobachtung des Fahrzeugumfelds ist aus Gründen des Datenschutzes eventuell nicht zulässig. Jedoch ist eine genaue Zuordnung zum Schadenereignis juristisch zwingend notwendig.

Die DE 10 2018 206 037 A1 betrifft eine Trackingvorrichtung zum Mitführen für einen Verkehrsteilnehmer und ein Verfahren zur Detektion eines Verkehrsteilnehmers. Die Trackingvorrichtung enthält neben einer Lokalisierungsvorrichtung und einem Bewegungssensor zur Erfassung von typischen Bewegungen von Verkehrsteilnehmern ein Steuergerät, das dafür eingerichtet ist, anhand der Sensorsignale des Bewegungssensors zu erkennen, ob die Trackingvorrichtung von einem Verkehrsteilnehmer mitgeführt wird, und eine Sende-/Empfangseinrichtung zum Datenaustausch mit einem in einem Fahrzeug installierten System zur Detektion eines Verkehrsteilnehmers. Das System dient der Vermeidung von Kollisionen zwischen Fahrzeug und Verkehrsteilnehmer.

Die DE 102 53 192 A1 lehrt ein Verfahren zur Vermeidung von Kollisionen eines ersten Verkehrsteilnehmers mit anderen Verkehrsteilnehmern sowie ein für diesen Zweck eingerichtetes mobiles Kollisionswarnsystem. In dem Verfahren ermitteln Verkehrsteilnehmer ihre jeweilige aktuelle räumlichen Position und senden Warnsignale aus, welche ihre jeweilige aktuelle räumliche Position wiedergeben. Ein erster Verkehrsteilnehmer empfängt die Warnsignale der anderen Verkehrsteilnehmer und berechnet auf der Basis der Positionsdaten eine potentielle Kollision voraus.

Die DE 10 2017 219818 A1 offenbart ein Verfahren zum Überwachen eines Fahrzeugumfelds eines parkenden Fahrzeugs, insbesondere zur Identifikation von Funksignalquellen im Fahrzeugumfeld, sowie ein Fahrzeug mit einer solchen Vorrichtung.

Vor diesem Hintergrund hat sich die Erfindung die Aufgabe gestellt, Verfahren und Vorrichtungen zur Verfügung zu stellen, mit denen eine automatische Identifikation des Schadensverursachers möglich werden.

Die Aufgabe wird erfindungsgemäß gelöst durch ein Verfahren mit den Merkmalen des Anspruchs 1 sowie ein Kraftfahrzeug mit den Merkmalen des Anspruchs 8. Ausgestaltungen und Weiterbildungen der Erfindung ergeben sich aus den abhängigen Ansprüchen und der Beschreibung.

Gegenstand der Erfindung ist ein Verfahren, bei dem bei Detektion einer Beschädigung eines geparkten Kraftfahrzeugs mindestens zwei Kommunikationsmodule des Kraftfahrzeugs durch Triangulation die Positionen von sich im Umfeld des Kraftfahrzeugs befindenden mobilen Kommunikationsvorrichtungen ermitteln, ihre MAC-Adressen erfassen und die Trajektorien der mobilen Kommunikationsvorrichtungen verfolgt. Aus den Trajektorien wird die mobile Kommunikationsvorrichtung des Verursachers des Schadens ermittelt und mit einer Kamera des geparkten Kraftfahrzeugs wird eine Bild- oder Videoaufnahme in Richtung der aktuellen Position der mobilen Kommunikationsvorrichtung des Verursachers erstellt.

Die mobilen Kommunikationsvorrichtungen im Umfeld des Kraftfahrzeugs müssen zur Kommunikation mit den Kommunikationsmodulen des Kraftfahrzeugs befähigt sein. In einer Ausführungsform handelt es sich bei den Kommunikationsmodulen des Kraftfahrzeugs um WLAN-Module. In einer anderen Ausführungsform handelt es sich bei den Kommunikationsmodulen des Kraftfahrzeugs um Bluetooth-Module. In noch einer anderen Ausführungsform handelt es sich bei den Kommunikationsmodulen des Kraftfahrzeugs um Mobilfunk-Module. In wieder einer anderen Ausführungsform handelt es sich bei den Kommunikationsmodulen des Kraftfahrzeugs um Infrarot-Module.

Die Position der sich im Umfeld des geparkten Kraftfahrzeugs befindenden mobilen Kommunikationsvorrichtungen wird von mindestens zwei Kommunikationsmodulen des Kraftfahrzeugs durch Triangulation ermittelt. In einer Ausführungsform des Verfahrens werden mindestens drei Kommunikationsmodule des Kraftfahrzeugs eingesetzt. In einer weiteren Ausführungsform des Verfahrens werden vier Kommunikationsmodule des Kraftfahrzeugs eingesetzt, die möglichst weit voneinander entfernt an der Karosserie des Kraftfahrzeugs positioniert sind, d.h. in den Ecken des Kraftfahrzeugs (z.B. unter den Scheinwerfern bzw. Rücklichtern). Bei Verwendung von mehr als zwei Kommunikationsmodulen zur Triangulation lässt sich eine höhere Positionsauflösung erzielen.

In einer Ausführungsform des Verfahrens wird bei Detektion einer Beschädigung des geparkten Kraftfahrzeugs von mindestens einem Kommunikationsmodul des Kraftfahrzeugs ein Störsignal ausgesendet, um sich im Umfeld des Kraftfahrzeugs befindende mobile Kommunikationsvorrichtungen in einen Empfangsmodus zu schalten und in einen Suchmodus zu versetzen, wodurch die sich im Umfeld des Kraftfahrzeugs befindenden mobilen Kommunikationsvorrichtungen für das mindestens eine Kommunikationsmodul des Kraftfahrzeugs sichtbar werden und durch das mindestens eine Kommunikationsmodul des Kraftfahrzeugs aktiviert werden.

Ist das mindestens eine Kommunikationsmodul des Kraftfahrzeugs ein WLAN-Modul, so werden durch das aktive Störsignal WLAN-fähige mobile Kommunikationsvorrichtungen im Umfeld des Kraftfahrzeugs, die gegebenenfalls bereits in anderen Netzen als dem WLAN des geparkten Kraftfahrzeugs eingeloggt sind, in den Empfangsmodus geschaltet und durch den sich anschließenden Suchmodus für das mindestens eine WLAN-Modul des geparkten Kraftfahrzeugs sichtbar und können durch das mindestens eine WLAN-Modul des geparkten Kraftfahrzeugs aktiviert werden. Dadurch erfasst das mindestens eine WLAN-Modul des geparkten Kraftfahrzeugs die MAC-Adressen der sich im Umfeld des geparkten Kraftfahrzeugs befindenden WLAN-fähigen mobilen Kommunikationsvorrichtungen.

Die MAC-Adresse (Media-Access-Control-Adresse) ist die Hardware-Adresse des Netzwerkadapters eines mobilen Kommunikationsgerätes, die als eindeutiger Identifikator des Geräts in einem Rechnernetz dient. Man spricht auch von physischer Adresse oder Geräteadresse. In einer Ausführungsform des Verfahrens erfolgt ein Abgleich der MAC-Adresse mit der IP-Adresse der mobilen Kommunikationsvorrichtung, um den Verursacher des Schadens zu ermitteln.

Die Positionen der sich im Umfeld des Kraftfahrzeugs befindenden mobilen Kommunikationsvorrichtungen werden durch Triangulation ermittelt. Das Verfahren der Triangulation ist dem Fachmann im Prinzip bekannt. Die Kommunikationsmodule senden ein Signal aus, das von den mobilen Kommunikationsvorrichtungen im Umfeld des Kraftfahrzeugs empfangen und beantwortet wird. Aus den ermittelten Winkeln der Antwortsignale und dem bekannten Abstand der Kommunikationsmodule voneinander können dann die Position der sich im Umfeld des Kraftfahrzeugs befindenden mobilen Kommunikationsvorrichtungen berechnet werden. Zusätzlich können die durch Ermittlung der Laufzeiten der Signale zwischen Kommunikationsmodul und mobiler Kommunikationsvorrichtung bestimmbaren Abstände in die Berechnung einbezogen werden.

Durch wiederholte Positionsermittlung lässt sich für jede der erfassten mobilen Kommunikationsvorrichtungen eine Trajektorie bestimmen. Die Trajektorie gibt die Position der jeweiligen mobilen Kommunikationsvorrichtung in Abhängigkeit von der Zeit wieder ("Bewegungsprofil").

Aus den Positionen der sich im Umfeld des Kraftfahrzeugs befindenden mobilen Kommunikationsvorrichtungen zum Zeitpunkt der Detektion des Schadensereignisses bzw. zum Zeitpunkt der erstmaligen Erfassung der jeweiligen mobilen Kommunikationsvorrichtung ("Referenzpunkt") und den Trajektorien lässt sich die mobile Kommunikationsvorrichtung des Verursachers des Schadens ermitteln. Hierbei werden die mobilen Kommunikationsvorrichtungen von Unbeteiligten von der mobilen Kommunikationsvorrichtung des Verursachers separiert.

In einer Ausführungsform des Verfahrens werden hierzu Zonenattribute und Bewegungsprofile herangezogen. Zunächst wird auf der Seite des Kraftfahrzeugs, an der ein Schaden detektiert wurde, eine Zone um die Position des detektierten Schadens definiert, die als aktive Beschädigungszone klassifiziert ist. Diejenigen Kommunikationsgeräte, deren Ausgangsposition (Referenzpunkt) sich außerhalb der aktiven Beschädigungszone befinden (z.B. nicht an der relevanten Fahrzeugseite), werden aussortiert.

Diejenigen Kommunikationsgeräte, deren Ausgangsposition sich innerhalb der aktiven Beschädigungszone befindet, werden anhand ihres Bewegungsprofils klassifiziert. So werden beispielsweise die mobilen Kommunikationsgeräte von unbeteiligten Personen aussortiert, die mit gleichmäßiger Geschwindigkeit am Kraftfahrzeug vorbeilaufen. Die Trajektorie des Verursachers des Schadens ist durch typische Attribute identifizierbar, z.B. Verharren an der Position des detektierten Schadens, Fluchtbewegung aus der aktiven Beschädigungszone, Verlassen des Unfallortes mit Beschleunigung, etc.

Nach Ermittlung der mobilen Kommunikationsvorrichtung des Verursachers des Schadens wird mit einer Kamera des geparkten Kraftfahrzeugs eine Bild- oder Videoaufnahme in Richtung der aktuellen Position der mobilen Kommunikationsvorrichtung des Verursachers erstellt. In einer Ausführungsform ist die Kamera eine Umfeldkamera des geparkten Kraftfahrzeugs. In einer anderen Ausführungsform ist die Kamera eine Dashcam. In einer Ausführungsform des Verfahrens wird die Kamera auf die aktuelle Position der mobilen Kommunikationsvorrichtung des Verursachers fokussiert. In einer weiteren Ausführungsform wird der von der Kamera aufgenommene Bildausschnitt auf einen Bereich begrenzt, der einem senkrechten Zylinder mit einem Radius von 1 m um die aktuelle Position der mobilen Kommunikationsvorrichtung des Verursachers entspricht. Damit soll vermieden werden, dass außer dem Verursacher auch andere Personen von der Kamera aufgenommen werden.

Gegenstand der Erfindung ist auch ein Kraftfahrzeug. Das Kraftfahrzeug umfasst Mittel zur Detektion eines Unfallschadens. In einer Ausführungsform umfassen die Mittel zur Detektion eines Unfallschadens Mittel zur Detektion und Auswertung von Erschütterungen des Kraftfahrzeugs und von Körperschall-Ereignissen an Karosserieteilen des Kraftfahrzeugs. In einer weiteren Ausführungsform umfassen die Mittel zur Detektion eines Unfallschadens mindestens einen Beschleunigungssensor. Die Mittel zur Auswertung sind dafür eingerichtet, Erschütterungen und Körperschall-Ereignisse je nach Schwere als ein Schadensereignis (Kratzer/Schlag/Delle/Stauchung) zu klassifizieren. Derartige Systeme zur Detektion eines Unfallschadens sind dem Fachmann im Prinzip bekannt.

Das Kraftfahrzeug umfasst weiterhin ein Zentralmodul, das dafür eingerichtet ist, von den Mitteln zur Detektion eines Unfallschadens aktiviert zu werden und Daten zur Position des detektierten Schadens zu empfangen. Das Zentralmodul ist verbunden mit mindestens zwei Kommunikationsmodulen des Kraftfahrzeugs, die beispielsweise WLAN-Module sein können. In einer Ausführungsform ist das Zentralmodul mit mehr als zwei, z.B. drei, vier oder sechs Kommunikationsmodulen verbunden, die an der Karosserie des Kraftfahrzeugs angeordnet sind. In einer Ausführungsform sind vier Kommunikationsmodule so an der Karosserie des Kraftfahrzeugs angeordnet, dass sie einen möglichst großen Abstand voneinander aufweisen, z.B. unter den Scheinwerfern und den Rückleuchten des Kraftfahrzeugs. Dadurch ist gewährleistet, dass der gesamte Umgebungsbereich des Kraftfahrzeugs (360°) erfasst wird.

Die Kommunikationsmodule sind als Trackingmodule ausgeführt und miteinander verbunden. Die Trackingmodule sind dafür eingerichtet, gegebenenfalls im Zusammenspiel mit der Zentraleinheit, durch Triangulation die Positionen von sich im Umfeld des Kraftfahrzeugs befindenden mobilen Kommunikationsvorrichtungen zu ermitteln und Veränderungen der ermittelten Positionen zu erfassen, um Trajektorien der mobilen Kommunikationsvorrichtungen zu bestimmen.

Das Zentralmodul ist dafür eingerichtet, von den Kommunikationsmodulen Daten zu empfangen und zu verarbeiten, wobei die Daten MAC-Adressen, Positionen und Positionsveränderungen von sich im Umfeld des Kraftfahrzeugs befindenden mobilen Kommunikationsvorrichtungen umfassen.

Das Zentralmodul ist auch dafür eingerichtet, das mindestens eine Kommunikationsmodul des Kraftfahrzeugs ein Störsignal aussenden zu lassen, das sich im Umfeld des Kraftfahrzeugs befindende mobile Kommunikationsvorrichtungen in einen Empfangsmodus schaltet und in einen Suchmodus versetzt, und dafür, die sich im Umfeld des Kraftfahrzeugs befindenden mobilen Kommunikationsvorrichtungen durch das mindestens eine Kommunikationsmodul des Kraftfahrzeugs aktivieren und deren MAC-Adressen ermitteln zu lassen. In einer Ausführungsform ist das Zentralmodul dafür eingerichtet, aus der ermittelten MAC-Adresse einer sich im Umfeld des Kraftfahrzeugs befindenden mobilen Kommunikationsvorrichtung die zugehörige IP-Adresse zu ermitteln. Die Feststellung der MAC-Adresse und der Abgleich mit der IP-Adresse erlaubt es, bei Unfallflucht den Verursacher des Schadens direkt ermitteln zu lassen.

Das Zentralmodul ist weiterhin dafür eingerichtet, mit den Daten zur Position des detektierten Schadens, den MAC-Adressen, Positionen und Positionsveränderungen der sich im Umfeld des Kraftfahrzeugs befindenden mobilen Kommunikationsvorrichtungen die mobile Kommunikationsvorrichtung des Verursachers des Schadens zu identifizieren.

Das Zentralmodul ist weiterhin dafür eingerichtet, eine Kamera des Kraftfahrzeugs zu steuern und nach Identifizierung der mobilen Kommunikationsvorrichtung des Verursachers des Schadens die Kamera auf eine aktuelle Position der mobilen Kommunikationsvorrichtung des Verursachers auszurichten und ein Bild oder Video des Verursachers aufnehmen zu lassen.

Zu den Vorteilen des erfindungsgemäßen Verfahrens und der vorgestellten Vorrichtung zählt, dass sie die Zuordnung eines detektierten Schadens zum Verursacher und dessen Identifizierung ermöglichen. Durch Ermittlung der Position des Schadenverursachers wird ein gezielter und rechtskonformer Einsatz von Bildaufzeichnungsgeräten möglich und die Persönlichkeitsrechte von Unbeteiligten werden gewahrt.

Weitere Vorteile und Ausgestaltungen der Erfindung ergeben sich aus der Beschreibung und den beiliegenden Zeichnungen.

Die Erfindung ist anhand von Ausführungsformen in den Zeichnungen schematisch dargestellt und wird unter Bezugnahme auf die Zeichnungen weiter beschrieben. Es zeigt:
- Figur 1: eine Ausführungsform eines erfindungsgemäßen Kraftfahrzeugs und eine Veranschaulichung des erfindungsgemäßen Verfahrens;
- Figur 2: das Kraftfahrzeug aus Figur 1 und eine weitere Veranschaulichung des erfindungsgemäßen Verfahrens.

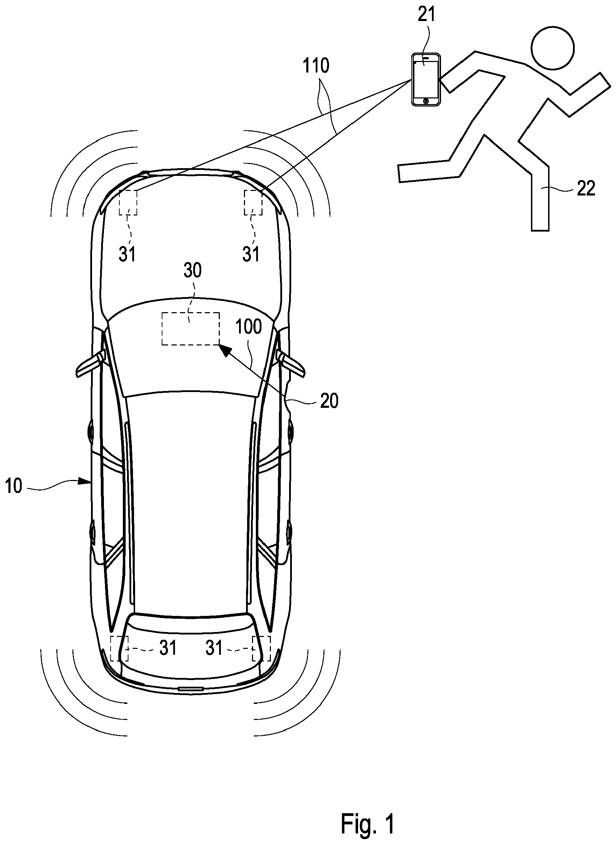

Figur 1 zeigt ein erfindungsgemäßes Kraftfahrzeug 10 mit einem Zentralmodul 30, das in bidirektionaler Verbindung mit vier WLAN-Modulen 31 steht, die an den Ecken der Karosserie des Kraftfahrzeugs 10 angeordnet sind. An einer Seite des Kraftfahrzeugs wurde ein Schaden 20 verursacht.

In Figur 1 schematisch dargestellt sind auch der Verursacher 22 des Schadens 20 und eine WLAN-fähige mobile Kommunikationsvorrichtung 21 (z.B. ein Smartphone oder ein Tablet-Computer) des Verursachers 22.

Zur Veranschaulichung des erfindungsgemäßen Verfahrens sind in Figur 1 auch beispielhafte Verfahrensschritte 100 und 110 symbolisiert.

In Schritt 100 wird der Schaden 20 durch Auswertung der von in Figur 1 nicht dargestellten Sensoren detektierten Erschütterung des Kraftfahrzeugs 10 bzw. der durch das Schadensereignis verursachten Körperschallsignale detektiert und es erfolgt eine Aktivierung des Zentralmoduls 30 und der damit verbundenen WLAN-Module 31.

In Schritt 110 wird über die WLAN-Module 31 die Position einer mobilen Kommunikationsvorrichtung 21 des Verursachers 22 durch Triangulation ermittelt und die Trajektorie der mobilen Kommunikationsvorrichtung 21 bzw. des Verursachers 22 aufgezeichnet. In der Figur eingezeichnet ist eine Triangulation mittels der beiden vorderen WLAN-Module 31 des Fahrzeugs 10. Die Triangulation kann jedoch auch durch die beiden WLAN-Module 31 auf der Seite des Fahrzeugs 10 erfolgen, an der sich der Schaden 20 befindet, oder durch drei oder alle vier WLAN-Module 31 des Fahrzeugs 10. Je mehr WLAN-Module 31 bei der Triangulation eingesetzt werden, desto höher ist die Genauigkeit der Positionsbestimmung.

Zudem wird mittels der WLAN-Module 31 die MAC Adresse der WLAN-fähigen mobilen Kommunikationsvorrichtung 21 des Verursachers 22 ermittelt und ist zur weiteren Auswertung verfügbar.

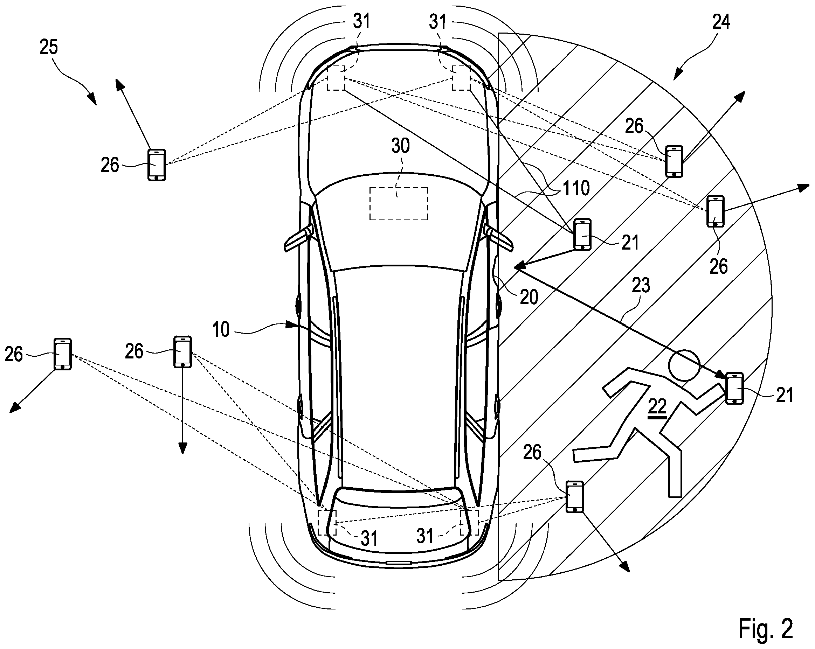

Figur 2 zeigt das Kraftfahrzeug 10 aus Figur 1 in einem alternativen Szenario, bei der sich neben einer mobilen Kommunikationsvorrichtung 21 des Verursachers 22 des Schadens 20 im Umfeld des Kraftfahrzeugs 10 auch mehrere mobile Kommunikationsvorrichtungen 26 unbeteiligter Personen befinden. Wie in der Zeichnung durch gestrichelte Linien angedeutet, werden auch die Positionen der mobilen Kommunikationsvorrichtungen 26 durch Triangulation ermittelt und ihre Trajektorien (in der

Figur durch Pfeile symbolisiert) werden aufgezeichnet, was im Folgenden als Tracking bezeichnet wird. In Figur 2 sind auch Positionen der mobilen Kommunikationsvorrichtung 21 des Verursachers 22 zu zwei verschiedenen Zeitpunkten und die Trajektorie 23 der mobilen Kommunikationsvorrichtung 21 zwischen den Positionen dargestellt.

Bei Detektion eines Schadens 20 wird ein Zeitstempel (Timestamp) erzeugt, der auch den Ort des Schadens 20 (z.B. Türe rechts) enthält, und die Unfallauswertung und das Tracking werden aktiviert.

Im Umfeld des Kraftfahrzeugs 10 befindliche WLAN-fähige mobile Kommunikationsvorrichtungen 21, 26 werden durch die WLAN-Module 31 angetriggert und durch Triangulation exakt einer Position um das Kraftfahrzeug 10 zugeordnet. Optional werden bereits in einem WLAN angemeldete Kommunikationsvorrichtungen 21, 26 durch ein kurzes Störsignal auf Kontaktbereitschaft gesetzt.

Die im Empfangsradius der WLAN-Module 31 befindlichen mobilen Kommunikationsvorrichtungen 21, 26 werden erfasst und ihre jeweilige MAC-Adresse wird abgespeichert. Die Berechnungen aus den Winkeln und Strecken der verfügbaren Signale gleicher MAC Adressen ergeben einen eindeutigen und auswertbaren Datensatz:
MAC Adresse 1 - Position (X1/Y1/Z1) zum Fahrzeug (Referenzpunkt 1),
MAC Adresse 2 - Position (X2/Y2/Z2) zum Fahrzeug (Referenzpunkt 2),
MAC Adresse i - Position (Xi/Yi/Zi) zum Fahrzeug (Referenzpunkt i).

Durch wiederholte Ermittlung der Positionen der zu den MAC-Adressen 1 bis i gehörenden mobilen Kommunikationsvorrichtungen 21, 26 lassen sich deren Trajektorien bestimmen. Die Trajektorien geben die Position der jeweiligen mobilen Kommunikationsvorrichtung 21, 26 in Abhängigkeit von der Zeit wieder.

Damit kann der Verursacher 22 im Umfeld des Kraftfahrzeugs 10 aus einer Vielzahl von MAC Adressen identifiziert sowie seine Position für Aufnahmen ermittelt werden. Dazu werden die Kommunikationsvorrichtungen 26 von Unbeteiligten von der Kommunikationsvorrichtung 21 des Verursachers 22 separiert. Hierfür werden Zonenattribute 24, 25 und Bewegungsprofile herangezogen. Es wird eine aktive Beschädigungszone 24 um den Schaden 20 definiert. Diejenigen Kommunikationsgeräte 26, deren Ausgangsposition (Referenzpunkt) sich außerhalb der aktiven Beschädigungszone 24, also in der irrelevanten Zone 25 (z.B. nicht an der relevanten Fahrzeugseite) befinden, werden aussortiert. Diejenigen Kommunikationsgeräte 21, 26, deren Ausgangsposition sich innerhalb der aktiven Beschädigungszone 24 befindet, werden anhand ihres Bewegungsprofils klassifiziert. So werden beispielsweise am Kraftfahrzeug 10 vorbeilaufende Personen aussortiert. Die Trajektorie 23 des Verursachers 22 ist durch typische Attribute identifizierbar, z.B. Verharren an der Position des Schadens 20, Fluchtbewegung, Beschleunigen beim Verlassen des Unfallortes etc. Typischerweise wird der Verursacher 22 eines Schadens 20 zunächst den von ihm angerichteten Schaden 20 in Augenschein nehmen bzw. untersuchen, ob eine Beschädigung am Kraftfahrzeug 10 sichtbar ist und daher eine gewisse Zeit in der unmittelbaren Umgebung des Schadens 20 verharren und sich dann entfernen. Oft geschieht dies fluchtartig, um eine Entdeckung zu vermeiden. Im Gegensatz dazu bewegen sich Nichtbeteiligte in der Regel mit gleichmäßiger Geschwindigkeit am Kraftfahrzeug 10 vorbei.

Mit dieser Methode sind Ermittlung und Tracking des Verursachers 22 eines Schadens 20 und der MAC-Adresse seiner mobilen Kommunikationsvorrichtung 21 mit hoher Wahrscheinlichkeit möglich. Über einen Abgleich der MAC-Adresse mit der korrespondierenden IP-Adresse kann die Identität des Verursachers 22 ermittelt und die Person im Rechtsfall identifiziert werden.

Sobald die mobile Kommunikationsvorrichtung 21 des Verursachers 22 identifiziert und seine Position ermittelt ist, kann mit der Umfeldkamera oder einer Dashcam des Kraftfahrzeugs 10 gezielt und gesetzeskonform eine Aufnahme des Verursachers 22 erstellt werden, ohne unbeteiligte Passanten mit zu erfassen.

### Bezugszeichenliste

- 10: geparktes Fahrzeug
- 20: Schaden
- 21: mobile Kommunikationsvorrichtung des Verursachers des Schadens
- 22: Verursacher des Schadens
- 23: Trajektorie des Verursachers
- 24: aktive Beschädigungszone
- 25: irrelevante Zone
- 26: mobile Kommunikationsvorrichtung einer unbeteiligten Person
- 30: Zentralmodul
- 31: WLAN-Modul
- 100: Schadensdetektion
- 110: Triangulation

## Patentansprüche

1. Verfahren, worin bei Detektion einer Beschädigung eines geparkten Kraftfahrzeugs (10) mindestens zwei Kommunikationsmodule (31) des Kraftfahrzeugs (10) durch Triangulation die Positionen von sich im Umfeld des Kraftfahrzeugs (10) befindenden mobilen Kommunikationsvorrichtungen (21, 26) ermitteln, ihre MAC-Adressen erfassen und ihre Trajektorien (23) verfolgen; und worin die mobile Kommunikationsvorrichtung (21) des Verursachers (22) des Schadens (20) ermittelt wird; und worin mit einer Kamera des geparkten Kraftfahrzeugs (10) eine Bildaufnahme oder Videoaufnahme in Richtung der aktuellen Position der mobilen Kommunikationsvorrichtung (21) des Verursachers (22) erstellt wird.

2. Verfahren nach Anspruch 1, worin bei Detektion einer Beschädigung des geparkten Kraftfahrzeugs (10) von mindestens einem Kommunikationsmodul (31) des Kraftfahrzeugs (10) ein Störsignal ausgesendet wird, um sich im Umfeld des Kraftfahrzeugs befindende mobile Kommunikationsvorrichtungen (21,26) in einen Empfangsmodus zu schalten und in einen Suchmodus zu versetzen, wodurch die sich im Umfeld des Kraftfahrzeugs (10) befindenden mobilen Kommunikationsvorrichtungen (21, 26) für das mindestens eine Kommunikationsmodul (31) des Kraftfahrzeugs (10) sichtbar werden und durch das mindestens eine Kommunikationsmodul (31) des Kraftfahrzeugs (10) aktiviert werden.

3. Verfahren nach Anspruch 1 oder 2, worin die Kommunikationsmodule (31) des Kraftfahrzeugs (10) WLAN-Module sind.

4. Verfahren nach einem der voranstehenden Ansprüche 3, worin zur Triangulation vier Kommunikationsmodule (31) des Kraftfahrzeugs (10) eingesetzt werden.

5. Verfahren nach einem der voranstehenden Ansprüche, worin die mobile Kommunikationsvorrichtung (21) des Verursachers (22) des Schadens (20) aus den Positionen der sich im Umfeld des Kraftfahrzeugs (10) befindenden mobilen Kommunikationsvorrichtungen (21, 26) zum Zeitpunkt der Detektion des Schadens (20) und den Trajektorien (23) der sich im Umfeld des Kraftfahrzeugs (10) befindenden mobilen Kommunikationsvorrichtungen (21, 26) ermittelt wird.

6. Verfahren nach einem der Ansprüche 1 bis 4, worin die mobile Kommunikationsvorrichtung (21) des Verursachers (22) des Schadens (20) aus den Positionen der sich im Umfeld des Kraftfahrzeugs (10) befindenden mobilen Kommunikationsvorrichtungen (21, 26) zum Zeitpunkt der erstmaligen Positionsbestimmung der sich im Umfeld des Kraftfahrzeugs (10) befindenden mobilen Kommunikationsvorrichtungen (21, 26) und deren Trajektorien (23) ermittelt wird.

7. Verfahren nach einem der voranstehenden Ansprüche, worin die mobilen Kommunikationsvorrichtungen (26) von Unbeteiligten unter Verwendung von Zonenattributen und Bewegungsprofilen von der mobilen Kommunikationsvorrichtung (21) des Verursachers (22) separiert werden.

8. Kraftfahrzeug (10) umfassend Mittel zur Detektion eines Unfallschadens (20), ein Zentralmodul (30), das verbunden ist mit mindestens zwei Kommunikationsmodulen (31) des Kraftfahrzeugs (10), wobei die Kommunikationsmodule (31) als Trackingmodule ausgeführt und miteinander verbunden sind und dafür eingerichtet sind, gegebenenfalls im Zusammenspiel mit dem Zentralmodul (30), durch Triangulation die Positionen von sich im Umfeld des Kraftfahrzeugs (10) befindenden mobilen Kommunikationsvorrichtungen (21, 26) zu ermitteln und Veränderungen der ermittelten Positionen zu erfassen, um Trajektorien (23) der mobilen Kommunikationsvorrichtungen (21, 26) zu bestimmen, und das dafür eingerichtet ist, von den Mitteln zur Detektion eines Unfallschadens (20) aktiviert zu werden und Daten zur Position des detektierten Unfallschadens (20) zu empfangen; und dafür eingerichtet, von den Kommunikationsmodulen (31) Daten zu empfangen und zu verarbeiten, die MAC-Adressen, Positionen und Positionsveränderungen von sich im Umfeld des Kraftfahrzeugs (10) befindenden mobilen Kommunikationsvorrichtungen (21, 26) umfassen, und mit den Daten zur Position des detektierten Schadens (20), den MAC-Adressen, Positionen und Positionsveränderungen der sich im Umfeld des Kraftfahrzeugs (10) befindenden mobilen Kommunikationsvorrichtungen (21,26) die mobile Kommunikationsvorrichtung (21) des Verursachers (22) des Schadens (20) zu identifizieren; und dafür eingerichtet, eine Kamera des Kraftfahrzeugs (10) zu steuern und nach Identifizierung der mobilen Kommunikationsvorrichtung (21) des Verursachers (22) des Schadens (20) die Kamera auf eine aktuelle Position der mobilen Kommunikationsvorrichtung (21) des Verursachers (22) auszurichten und ein Bild oder Video des Verursachers (22) aufnehmen zu lassen.

9. Kraftfahrzeug (10) nach Anspruch 8, bei dem das Zentralmodul (30) dafür eingerichtet ist, mindestens ein Kommunikationsmodul (31) des Kraftfahrzeugs (10) ein Störsignal aussenden zu lassen, welches sich im Umfeld des Kraftfahrzeugs (10) befindende mobile Kommunikationsvorrichtungen (21, 26) in einen Empfangsmodus schaltet und in einen Suchmodus versetzt, und dafür eingerichtet, die sich im Umfeld des Kraftfahrzeugs (10) befindenden mobilen Kommunikationsvorrichtungen (21,26) durch das Kommunikationsmodul (31) des Kraftfahrzeugs (10) aktivieren und deren MAC-Adressen ermitteln zu lassen.

## Claims

1. Method wherein, when damage to a parked motor vehicle (10) is detected, at at least two communication modules (31) of the motor vehicle (10) determine by means of triangulation the positions of mobile communication devices (21, 26) located in the vicinity of the motor vehicle (10), capture their MAC addresses and follow their trajectories (23); and wherein the mobile communication device (21) of the perpetrator (22) of the damage (20) is determined; and wherein, using a camera of the parked motor vehicle (10), an image recording or video recording in the direction of the current position of the mobile communication device (21) of the perpetrator (22) is generated.

2. Method according to claim 1, wherein, when damage is caused to the parked motor vehicle (10), an interference signal is transmitted from at least one communication module (31) of the motor vehicle (10), in order to switch mobile communication devices (21, 26) located in the vicinity of the motor vehicle into a receiving mode and to put them into a search mode, as a result of which the mobile communication devices (21, 26) located in the vicinity of the motor vehicle (10) become visible for the at least one communication module (31) of the motor vehicle (10) and are activated by the at least one communication module (31) of the motor vehicle (10).

3. Method according to claim 1 or 2, wherein the communication modules (31) of the motor vehicle (10) are WLAN modules.

4. Method according to any of the preceding claims 3, wherein four communication modules (31) of the motor-vehicle (10) are used for triangulation.

5. Method according to any of the preceding claims, wherein the mobile communication device (21) of the perpetrator (22) of the damage (20) is determined from the positions of the mobile communication devices (21, 26) located in the vicinity of the motor vehicle (10) at the point in time of the detection of the damage (20) and the trajectories (23) of the mobile communication devices (21, 26) located in the vicinity of the motor vehicle (10).

6. Method according to any of claims 1 to 4, wherein the mobile communication device (21) of the perpetrator (22) of the damage (20) is determined from the positions of the mobile communication devices (21, 26) located in the vicinity of the motor vehicle (10) at the point in time of the first position determination of the mobile communication devices (21, 26) located in the vicinity of the motor vehicle (10) and their trajectories (23).

7. Method according to any of the preceding claims, wherein the mobile communication devices (26) of uninvolved parties are separated from the mobile communication device (21) of the perpetrator (22) using zone attributes and movement profiles.

8. Motor vehicle (10) comprising means for detecting accidental damage (20), a central module (30) which is connected with at least two communication modules (31) of the motor vehicle (10), wherein the communication modules (31) are designed as tracking modules and are connected to one another and are configured, where necessary in cooperation with the central module (30), to determine by means of triangulation the positions of mobile communication devices (21, 26) located in the vicinity of the motor vehicle (10) and to capture changes in the determined positions in order to determine trajectories (23) of the mobile communication devices (21, 26), and which is configured to be activated by the means for detecting accidental damage (20) and to receive data regarding the position of the detected accidental damage (20); and is configured to receive and to process data from the communication modules (31), which comprise MAC addresses, positions and positional changes of mobile communication devices (21, 26) located in the vicinity of the motor-vehicle (10), and, with the data regarding the position of the detected damage (20), the MAC addresses, positions and positional changes in the mobile communication devices (21, 26) located in the vicinity of the motor vehicle (10), to identify the mobile communication device (21) of the perpetrator (22) of the damage (20); and is configured to control a camera of the motor vehicle (10) and, after identifying the mobile communication device (21) of the perpetrator (22) of the damage (20) to align the camera onto a current position of the mobile communication device (21) of the perpetrator (22) and to have an image or video of the perpetrator (22) recorded.

9. Motor vehicle (10) according to claim 8, in which the central module (30) is configured to have at least one communication module (31) of the motor-vehicle (10) transmit a disruption signal which switches mobile communication devices (21, 26) located in the vicinity of the motor vehicle (10) into a receiving mode and puts them into a search mode, and is configured to have the mobile communication devices (21, 26) located in the vicinity of the motor vehicle (10) activated by the communication module (31) and their MAC addresses determined.

## Revendications

1. Procédé, dans lequel lors de la détection d'un endommagement d'un véhicule automobile stationné (10), au moins deux modules de communication (31) du véhicule automobile (10) calculent par triangulation les positions de dispositifs de communication (21, 26) mobiles se trouvant dans l'environnement du véhicule automobile (10), détectent leurs adresses MAC et suivent leurs trajectoires (23) ; et dans lequel le dispositif de communication (21) mobile du responsable (22) du dommage (20) est calculé ; et dans lequel avec une caméra du véhicule automobile (10) stationné, une prise d'image ou prise vidéo est réalisée en direction de la position actuelle du dispositif de communication (21) mobile du responsable (22).

2. Procédé selon la revendication 1, dans lequel lors de la détection d'un endommagement du véhicule automobile (10) stationné par au moins un module de communication (31) du véhicule automobile (10), un signal perturbation est émis afin de commuter des dispositifs de communication (21, 26) mobiles se trouvant dans l'environnement du véhicule automobile dans un mode de réception et de le mettre dans un mode de recherche, par quoi les dispositifs de communication (21, 26) mobiles se trouvant dans l'environnement du véhicule automobile (10) sont visibles pour l'au moins un module de communication (31) du véhicule automobile (10) et sont activés par l'au moins un module de communication (31) du véhicule automobile (10).

3. Procédé selon la revendication 1 ou 2, dans lequel les modules de communication (31) du véhicule automobile (10) sont des modules WLAN.

4. Procédé selon l'une quelconque des revendications 3 précédentes, dans lequel pour la triangulation, quatre modules de communication (31) du véhicule automobile (10) sont utilisés.

5. Procédé selon l'une quelconque des revendications précédentes, dans lequel le dispositif de communication (21) mobile du responsable (22) du dommage (20) est calculé à partir des positions des dispositifs de communication (21, 26) mobiles se trouvant dans l'environnement du véhicule automobile (10) au moment de la détection du dommage (20) et des trajectoires (23) des dispositifs de communication (21, 26) mobiles se trouvant dans l'environnement du véhicule automobile (10).

6. Procédé selon l'une quelconque des revendications 1 à 4, dans lequel le dispositif de communication (21) mobile du responsable (22) du dommage (20) est calculé à partir des positions des dispositifs de communication (21, 26) mobiles se trouvant dans l'environnement du véhicule automobile (10) au moment de la première détermination de position des dispositifs de communication (21, 26) mobiles se trouvant dans l'environnement du véhicule automobile (10) et leurs trajectoires (23).

7. Procédé selon l'une quelconque des revendications précédentes, dans lequel les dispositifs de communication mobiles (26) de personnes non concernées sont séparés en utilisant des attributs de zone et profils de mouvement du dispositif de communication mobile (21) du responsable (22).

8. Véhicule automobile (10) comprenant des moyens pour la détection d'un endommagement (20), un module central (30) qui est relié à au moins deux modules de communication (31) du véhicule automobile (10), dans lequel les modules de communication (31) sont réalisés comme modules de suivi et sont reliés entre eux et sont conçus afin de calculer éventuellement en interaction avec le module central (30), par triangulation les positions de dispositifs de communication (21, 26) mobiles se trouvant dans l'environnement du véhicule automobile (10) et de détecter des modifications des positions calculées afin de déterminer des trajectoires (23) des dispositifs de communication (21, 26) mobiles, et qui est conçu afin d'être activé par les moyens de détection d'un endommagement (20) et de recevoir des données de positionnement de l'endommagement (20) détecté ; et conçu afin de recevoir et traiter des données des modules de communication (31), qui comportent des adresses MAC, positions et modifications de position de dispositifs de communication (21, 26) mobiles se trouvant dans l'environnement du véhicule automobile (10), et d'identifier avec les données de positionnement du dommage (20) détecté, les adresses MAC, positions et modifications de position des dispositifs de communication (21, 26) mobiles se trouvant dans l'environnement du véhicule automobile (10) le dispositif de communication (21) mobile du responsable (22) du dommage (20) ; et conçu afin de commander une caméra du véhicule automobile (10) et d'orienter après identification du dispositif de communication (21) mobile du responsable (22) du dommage (20) la caméra sur une position actuelle du dispositif de communication (21) mobile du responsable (22) et de laisser prendre une image ou vidéo du responsable (22).

9. Véhicule automobile (10) selon la revendication 8, pour lequel le module central (30) est conçu afin de faire émettre au moins un module de communication (31) du véhicule automobile (10) un signal de perturbation qui commute des dispositifs de communication (21, 26) mobiles se trouvant dans l'environnement du véhicule automobile (10) dans un mode de réception et les met dans un mode de recherche, et conçu afin de faire activer les dispositifs de communication (21, 26) mobiles se trouvant dans l'environnement du véhicule automobile (10) par le module de communication (31) du véhicule automobile (10) et calculer leurs adresses MAC.
